# EUROPEAN PATENT APPLICATION

(11) **EP 1 091 276 A1**
(43) Date of publication of application: **11.04.2001**
(21) Application number: 99440269.1
(22) Date of filing: 06.10.1999
(51) Int. Cl.: G06F 1/00, H04L 29/06

(54) **Authentication of hypertext kind of resources through signature handling protocol**

(71) Applicant: ALCATEL, 75008 Paris (FR)
(72) Inventor: Brette, Marc, 67408 Illkirch Cedex (FR)
(74) Representative: Menzietti, Domenico, Dipl.-Ing

(57) **Abstract**

Method of receiving a resource out of an application stored by a service provider on a site at a client terminal, both being interconnected. The method is advantageously implemented into the browser of the client. It comprises the steps of:
- requesting the resource within the application on the site from the client terminal;
- receiving a signed archive file containing the requested resource by the client terminal;
- authenticating the received signed archive file;
- retrieving the requested resource out of the received archive file if that was undoubtfully authenticated.

## Description

This invention relates to a method of receiving a resource as set forth in the preamble of claim 1, to a computer readable medium having a program recorded thereon and to a trustable disposal of a resource as set forth in the preamble of claim 10.

In the last ten years, networks of computerized terminals are more and more interconnected over the world. The set of those networks are called internet. They allow a transfer of data from one terminal to another almost everywhere as long as the terminals are connected to the same internet. The popularity of such "communication" was boosted by the introduction in the middle of the ninetieth of the so called World Wide Web (the "Web"). It is a decentralized, electronic database service offering an ensemble (universe) of dynamically connected information on the internet which win through and is called the Internet. Such information can be in any of various media and is relatively easily found by and made accessible to individuals exploring ("surfing") that universe ("Webspace"). More specifically, the Web is a distributed, hypertext system comprising hypermedia documents, Web servers and Web clients.

Web clients include software programs commonly known as browsers. Browsers typically reside on an individual's electronic terminal (e.g. personal computer, laptop and in the near future even phone terminal) and, among other things, provide for exploring the Web so as to find and access Web documents.

Web servers are server processes running at a Web site i.e. a terminal connected to the Internet. The Web servers support various features, including being compatible with one or more standard protocols, e.g., the HyperText Transfert Protocol ("HTTP"), the well-known, native protocol of the Web generally unifying its information. With that programs hypermedia documents are put on the Web and resources associated with applications stored by the server on the site are let available to clients. The Web servers do not only make documents and resources accessible to clients, but also direct specific documents to clients and complete transactions responsive to each client's request which were activated through their browsers.

Web documents ("pages") are constructed in conformity with one of various accepted formats or languages, e.g., HyperText Markup Language ("HTML"). The formats support, among other things, the Web's hypermedia and hypertext characteristic. As to the hypermedia characteristic, Web documents can, and generally do, combine content from one or more of the various media including text, graphics, audio and video. As to the hypertext characteristic, Web documents can, and generally do, contain electronic links to related Web documents. Selecting the link causes the browser to (i) connect to a server associated with that link, (ii) request the linked document and (iii) if the client satisfies the server's security requirements, receive and display the document.

The security of information and transaction transferred under that way has been identified as a significant problem. At the center of the problem are so-called crackers: individuals who seek to access computers, such as sites (servers), so as to conduct pranks, vandalism, espionage or other illegitimate activities. A way to respond to these activities, among other things is to strive to maintain the confidentiality and integrity of information, both as resident on servers and as communicated in Web transaction. Increasing the vulnerability to crackers is that the Web is an open system available to anyone in possession of readily available, affordable technology.

One important Web security issue is authentication. An example of an authentication on the Web is given by the SSL (Secure Sockets Layer) Handshake Protocol which was developed by Netscape Communications Corporation. The protocol supports server and client authentication. The SSL protocol is application independent, allowing protocols like HTTP, FTP (File Transfer Protocol), and Telnet to be layered on top of it transparently. The SSL protocol is able to negotiate encryption keys as well as authenticate the server before data is exchanged by the higher-level application. But the SSL protocol maintains the security and integrity only of the transmission channel. It uses encryption, authentication and message authentication codes only to authenticate the sites of the Web server as well as the Web client. The trust is then granted on a site by site basis.

That protocol does not authenticate the whole data itself which will be exchanged through the Internet and thus does not work against software virus like "Trojan horses". The later denominates some code put somewhere but mainly at the end of a data by an illegitimate one. Once the data is downloaded, the Trojan horse can be activated by the client unintentionally. Some special and very feared cases of Trojan horses are the so called "mockingbirds". They permit to intercept communication (especially login transactions) between the client and the server. When activated, the code will provide system-like responses to the client while saving their responses (especially account IDs, passwords and PINs).

An object of the invention is to ensure that any transaction between a trusted site and a client both interconnected is free of any kind of software virus, and to provide methods to implement such measures without losing the comfort of a service like the Web.

These objects are attained by a method of receiving a resource as claimed in claim 1, a computer readable medium as claimed in claim 9 and a trustable disposal of resources as claimed in claim 10.

It is extremely hard to ensure that platforms like Web servers are visited only by trusted clients. A site manager, the one responsible for the maintenance of a site, can never be completely sure that none impersonator will achieve to penetrate a protected Web server. It is also difficult to protect a single application (Web page) with all the resources embedded in it. This explains the interest to protect the whole content of the resources which may be downloaded during a critical transaction e.g. like a banking transaction or an electronic commerce application.

The basic idea of the invention consists of assembling resources which shall be downloaded together with their respective application into a single file, "an archive file". To sign these files in their entire content ensures then that nowhere in the data's of one resource is hidden some virus. These signed files are stored on a site and let to the disposal of some potential clients able to authenticate the signature.

When a client surfing on the Web will come across one of such a resource, he may be interested to open it. This will necessarily means that before being activated on its terminal, it must be downloaded. Using its browser on its terminal on which advantageously a protocol according to the invention is running, he will request the chosen resource. This will start the protocol which will look after the corresponding archive file of that resource onto the site where the resource was found. After a download of the entire signed archive file onto the client terminal, the protocol will have to authenticate the signature of that file. Only in the positive case that it was entirety authenticated, the protocol will retrieve the requested resource out of the archive file, to active it on client terminal.

With that protocol, the client can trust not only the site itself, like it would be the case if its browser would use only a SSL protocol, but will be sure that the activation of that resource on its own terminal will not activate a virus hidden somewhere into the data's of that resource. The solution obtained with that invention permits to combine the flexibility of a service like the Web with a communication between client terminal and sites free of any transfer of virus specially of the feared mockingbirds.

Further advantageous features of the invention are defined in the dependent claims and will become apparent from the following description and the drawing.

One embodiment of the invention will now be explained in more detail with reference to the accompanying drawing, in which:

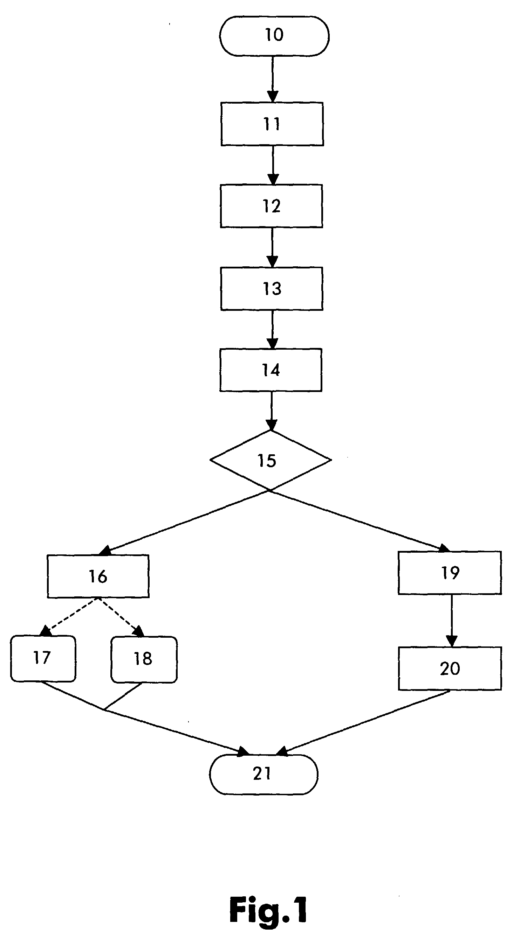

Fig.1 is a flow chart showing steps associated with the method of receiving a resource of a resource according to the invention.

The present invention concerns a trustable activation of some resources downloaded out of some site and methods therefore. A service provider who wants to let on a site resources all trustfully free of any virus to the disposal of some clients, will have to apply the following procedure. The codes of these resources must be assembled in an archive file. Some times, it is of advantage to include also the codes of the corresponding application into the archive file. To build that archive file, already existing archive formats like tar, zip or jar can be used. The later is applied specifically for an ensemble of files written in an objected oriented syntax like "java", the one used for most of the resources of applications on the Web.

In some header of the archive file may be stored the information of their content. Afterwards, the archive file must be protected from the illegitimate implementation of subsidiary codes like the one of a mockingbird. This is achieved by signing the entire content of the archive file.

There exists several possibilities to perform a signature of a file. One way which would be quite advantageous in the context of this invention is the use of an encryption scheme. A particular popular one due to the ease of its utilization, is the so called public-key encryption.

This encryption scheme is based on a pair of "keys". One of them is called a public key and the other one a private key. The public key is published, while the private key is kept secret. The need for the signer (e.g. some service provider like e.g. the some credit card company) and the receiver (e.g. the browser of some client) to share secret information is eliminated; all communications involve only public keys, and no private key is ever transmitted or shared. In this system, it is no longer necessary to trust the security of some means of communications. The only requirement is that public keys be associated with their users in a trusted (authenticated) manner (for instance, in a trusted directory).

For the purpose of the invention, the archive files are encrypted using the private key of the service provider. If for example, a company wants to let to the disposal of its clients some information trustfully free of viruses on the Internet, they must be signed using the private key of that company. For that, the archive file containing the code containing this information (e.g. a resource of some application) will be encrypted. The signer don't need to care who will read this information or even visit the site where it is let to the disposal since its signature can't be imitated. This will ensure the one (e.g. some client) who will decrypt that signed archive file using a public key, of the absence of any fake code. No third-party could have modified the signed archive file without destroying the whole file.

To optimize the downloading i.e. avoiding any delay or unnecessary checking procedure, it is of great advantage for the client to install a protocol according to the method of the invention onto its browser e.g. in an URL syntax (Universal Resource Locator) as below:
〈URL: signed.protocol: //host/path?resource〉.
Where protocol is the underlying protocol used to retrieve the archive file. It may be for example http, https, ftp or file. Host is the name of the server where the jar file is located (it may be empty for local file). Path is the location of the jar file on the host for the given protocol. Resource is the actual name of the resource inside the jar file.
Example:
signed.http://www.alcatel.com/applets/smartcard.jar?index.html

On Fig. 1, is shown a flow chart that depicts an example of the downloading method according to the present invention. As already said above, it can be implemented on the browser of client's terminal. The method starts 10 by an action of the client onto its terminal like choosing an Internet address out of an address book e.g. stored by its browser.

In step 11, the client requests access of a Web server site by sending the Web location (Internet address) he choose when starting. Such location may be in the form of a URL. In this step, a secure communication channel may be established between the client terminal and the site. For example, if SSL is employed, the secure communication channel is established during the SSL handshake, including by, among other things, (i) negotiating an encryption algorithm between the site and the terminal and (ii) authenticating the site to the client terminal. But the building of a secure communication channel is no more of priority since the resources are anyway protected according to the invention.

In step 12, the client requests a specific resource within an application to be activated on its terminal. This will bring the browser of the client to look after the corresponding archive file 13. After finding it, the transfer 14 of that file will occur through the communication channel.

When the archive file is downloaded onto the client terminal, the authentication procedure 15 of its signature will start. The browser will apply some decryption scheme in accordance to the one used to encrypt it.

Dependent on the result of that procedure 15, will depend if the resource is taken out of the archive file or not. In the negative case, that the signature was not entirely recognized, it will mean that either the client is not allowed to download the requested resource or some codes in the archive file were illegitimately modified or added, then the archive file will be deleted 16 from the client terminal. Optionally, the protocol will contain the step 17 to send a message to the client to warn him about the result of the authentication and/or to send to the site a message 18 informing the signer of that resource and/or site manager that someone tried unsuccessfully to download some resources.

Alternatively, if the downloaded archive file was decrypted successfully, then the browser will look 19 for the requested resource into the downloaded archive file. It will then activate the resource onto the client terminal 20. The protocol will then end its procedure 21.

The steps described above can be configured to support various options, without departing from the principles of the invention to assemble all resources of sensible applications into a single archive file protected by a signature and ready to be downloaded.

The fact to implement the protocol onto the client browser, enable to perform the procedure in an almost transparent way. The client will not necessarily notice the take place of the authentication of the requested resource. He will even not know that the resource is somewhere archived on some signed file. It is the browser which will apply the protocol after the invention by first authenticate the signed archive file. If it succeeded, it will then retrieve the requested resource out of the archive file and activate it. All the steps may take a fraction of time mainly dependent on the transfer rate on the communication channel between the site of the Web server and the client terminal.

It is therefore particularly adapted for Web pages (applications on some site) which often contain a certain number of applets (resources made of java codes). They are some times part of the application user interface and are usually downloaded and dynamically generated. Applying the procedure according to the invention ensure that the whole application user interface does not contain any fake codes put there by some impostor. It is an ideal procedure for any application but some highly secure applications such as electronic commerce applications (electronic banking service or smart card facilities). The method according to the invention can be used also if the corresponding signed archive file is downloaded out of some untrustworthy site, since the entire content of the resource is itself protected. The author of the resource has the assurance that every reader of its resource will really read the information he put there himself.

## Claims

1. Method of receiving a resource out of an application stored by a service provider on a site at a client terminal, both being interconnected, the method comprising the step of
• requesting the resource within the application on the site from the client terminal; and
**characterized by**
the additional steps:
• receiving a signed archive file containing the requested resource by the client terminal;
• authenticating the received signed archive file;
• retrieving the requested resource out of the received archive file if that was undoubtfully authenticated.

2. Method of receiving a resource as claimed in claim 1, characterized in that the entire requested resource is signed.

3. Method of receiving a resource as claimed in claim 1, characterized in that the signature of the archive file is authenticated using a decryption scheme.

4. Method of receiving a resource as claimed in claim 1, characterized in that the service provider is part of a decentralized, electronic database service offering an ensemble of dynamically connected information like the Web.

5. Method of receiving a resource as claimed in claim 1, characterized in that it works transparently for the client.

6. Method of receiving a resource as claimed in claim 1, characterized in that the requested resources are object oriented resources like java applets.

7. A computer readable medium having a program recorded thereon, said computer readable medium comprising computer program code means adapted to perform all the steps of claim 1 when said program is run on the client terminal.

8. A computer readable medium as claimed in claim 7, characterized in that the program code is built with an Universal Resource Locator syntax.

9. A computer readable medium as claimed in claim 7, characterized in that the program code is implemented into a browser on the client terminal.

10. Trustable disposal of a resource from an application on a site to some client having a terminal interconnected with the site
**characterized in**
that the resource is stored in a signed archive file on the site.

11. Trustable disposal of a resource as claimed in claim 10, characterized in that the archive file is signed using an encryption scheme.
